# EUROPEAN PATENT SPECIFICATION

(11) **EP 2 425 372 B1**
(45) Date of publication and mention of the grant of the patent: **08.08.2018**
(21) Application number: 10769969.6
(22) Date of filing: 30.04.2010
(51) Int. Cl.: G06F 21/10, H04N 21/436, H04N 21/4367, H04N 21/8355, H04N 21/8352

(54) **METHOD AND APPARATUS FOR IMPORTING CONTENT**
VERFAHREN UND VORRICHTUNG ZUR INHALTSIMPORTIERUNG
PROCÉDÉ ET APPAREIL D'IMPORTATION D'UN CONTENU

(30) Priority: 30.04.2009 KR 20090038457
(43) Date of publication of application: 07.03.2012
(73) Proprietor: Samsung Electronics Co., Ltd., Suwon-si, Gyeonggi-do, 443-742 (KR)
(72) Inventor: JU, Hak-Soo, Suwon-si Gyeonggi-do 441-879 (KR); YOON, Young-Sun, Suwon-si Gyeonggi-do 441-742 (KR); HWANG, Yong-Ho, Seoul 138-791 (KR); KIM, Bong-Seon, Yongin-si Gyeonggi-do 448-519 (KR)
(74) Representative: Appleyard Lees IP LLP
(86) International application number: PCT/KR2010/002726
(87) International publication number: WO 2010/126324

(56) References cited:
- EP-A1- 2 009 567
- EP-A2- 1 804 515
- JP-A- 2006 520 946
- KR-A- 20070 073 550
- KR-A- 20070 073 553
- US-A1- 2006 075 424
- US-A1- 2007 156 599
- "DVB-CPCM", , 8 January 2009 (2009-01-08), pages 1-3, XP55040131, Retrieved from the Internet: URL:http://en.wikipedia.org/w/index.php?ti tle=DVB-CPCM&oldid=262650530 [retrieved on 2012-10-05]
- DVB: "Current version of working document â DVB CPCM Reference Model", 31. TV ANYTIME MEETING; 16-11-2004 - 19-11-2004; SYDNEY; FTP://FTP.BBC.CO.UK,, no. AN666, 10 November 2004 (2004-11-10), XP030097058,

## Description

### Technical Field

Exemplary embodiments relate to digital content protection, and more particularly, to protection of digital content in a digital rights management (DRM) system.

### Background Art

As the world is moving from the analog age to the digital age, more contents are being created in digitized forms. While copying of analog content requires much time and effort, digital content can be copied more easily and quickly.

Also, while the quality of the analog content is degraded in proportion to the copying frequency thereof, the quality of the digital content remains constant regardless of the frequency of copying. Accordingly, the ability to protect digital content is desirable and a variety of research projects for developing ways to protect digital content are being pursued.

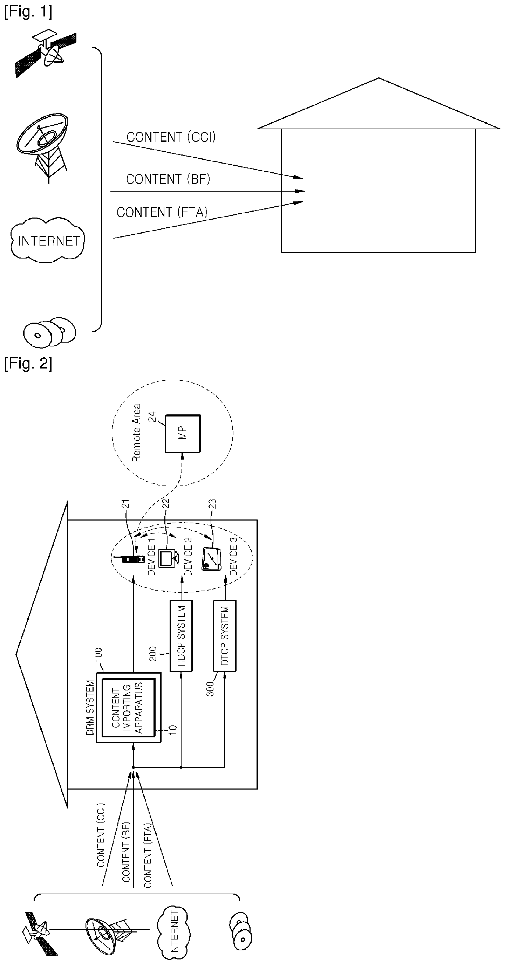

FIG. 1 illustrates a related art digital content protection environment. Referring to FIG. 1, in the related art digital content protection environment, a transmission stream is received through a variety of broadcasting transmission channels and digital content is designed to be protected by using information included in the transmission stream.

In particular, a U.S. organization, Cable Television Laboratories, Inc. (CableLabs), has proposed that copy control information (CCI) be attached to digital content in order to control copying of the content. The CCI is two-bit information to restrict the number of times digital content may be copied. The types of the CCI includes "copy free" (00), "copy once" (01), "copy no more" (10) and "copy never" (11). "Copy free" indicates that copying the content is permitted without restriction. "Copy once" indicates that only one time copying is permitted. If content with a CCI being "copy once" (01) is copied, the CCI of this content becomes "copy no more" (10). "Copy never" indicates a total prohibition of copying the content.

Also, in order to prohibit indiscriminant redistribution of high definition (HD)-level digital content broadcast in the U.S., the U.S. Federal Communications Commission (FCC) ordered that a broadcast flag should be attached to the digital content. The broadcast flag is one-bit information indicating whether indiscriminant redistribution of digital content is prohibited. The types of broadcast flag include broadcast flag on (1), and broadcast flag off (0). Broadcast flag on indicates that indiscriminant redistribution of digital content is not permitted, while broadcast flag off indicates that indiscriminant redistribution of the digital content is permitted.

The digital video broadcasting (DVB), the international digital television standards, has attached a free to air (FTA) flag to content in order to manage received content as a part of an FTA DVB service.

US2007/156599 Yoon et al describes a method and apparatus for importing content. The claims have been characterised over this document.

### Disclosure of Invention

### Technical Problem

However, since the related art methods of protecting digital content, such as the CCI and the broadcast flag, are very simple and limited in their expressions, it is difficult to protect digital content in a manner sufficient to satisfy the requirements of content consumers to freely use the content.

### Solution to Problem

According to the present invention there is provided a method according to claim 1. Also there is provided an apparatus according to claim 12.

An apparatus and method are described for protecting digital content in a variety of ways in response to the requirement of users for free use of the content.

The present invention also provides a computer readable recording medium having embodied thereon a computer program for executing the method in a computer system.

### Advantageous Effects of Invention

In the described examples, content which does not comply with the rule of a DRM system is imported as content complying with the rule of the DRM system. Thus, the content can be protected while being responsive to the demand of users for free usage, and only users authorized for the content can be allowed to use the content. As a result, the danger of content being illegally redistributed or used by many and unspecified persons can be prevented. In particular, according to the present invention, based on usage constraint information included in a content file received from the outside, for example, the FTA flag, the usage rule of the content included in this content file is determined and a content file complying with this usage rule is generated. In addition to the limited content protection by the related art FTA flag, the security requirements of content creators and content providers can be satisfied and at the same time the requirements of content consumers for free usage can be satisfied sufficiently.

### Brief Description of Drawings

FIG. 1 illustrates a related art digital content protection environment;
FIG. 2 illustrates a digital content protection environment according to an exemplary embodiment;
FIG. 3 illustrates a structure of a content importing apparatus according to an exemplary embodiment;
FIGS. 4 and 5 are mapping tables of usage constraint information (UCI) and usage control information according to an exemplary embodiment;
FIG. 6 is a mapping table of UCI and usage rules according to an exemplary embodiment;
FIG. 7 illustrates a format of a license according to an exemplary embodiment;
FIGS. 8 and 9 are flowcharts illustrating a content importing method according to an exemplary embodiment; and
FIG. 10 illustrates a home network environment to which a digital rights management (DRM) system of FIG. 2 is applied according to an exemplary embodiment.

### Best Mode for Carrying out the Invention

According to an aspect of an exemplary embodiment, there is provided a method of importing a first content file into a second content file, the method including: determining a usage rule of content included in the first content file based on information used to control remote access of the content included in the first content file; and generating the second content file that follows the determined usage rule.

According to an aspect of another exemplary embodiment, there is provided a computer readable recording medium having stored thereon a program for causing a computer to execute a method of importing a first content file into a second content file.

According to an aspect of another exemplary embodiment, there is provided an apparatus for importing a first content file to a second content file, the apparatus including: a usage rule determining unit which determines a usage rule of content included in the first content file based on information used to control remote access of the content included in the first content file; and a content file generating unit which generates the second content file that follows the determined usage rule.

### Mode for the Invention

Hereinafter, the present invention will be described in detail by explaining exemplary embodiments of the invention with reference to the attached drawings.

FIG. 2 illustrates a digital content protection environment according to an exemplary embodiment. Referring to FIG. 2, the digital content protection environment according to the exemplary embodiment includes a variety of content protection systems, such as a digital rights management (DRM) system 100, a high bandwidth digital content protection (HDCP) system 200, and a digital transmission content protection (DTCP) system 300, and a plurality of devices 21-23 protected by these content protection systems.

The DRM system 100 is a system for managing the rights of content received from the outside. The HDCP system 200 is a system for preventing copying of digital content output to a digital display through a high bandwidth interface, such as a digital video interface (DVI). The DTCP system 300 is a system for preventing copying of digital content transmitted through a universal serial bus (USB) complying with Institute of Electrical and Electronics Engineers (IEEE) 1394 standard. In addition to these content protection systems, other content protection systems such as a conditional access system (CAS), and a content protection for recordable media (CPRM) system, may be further included, which can be easily understood by a person skilled in the art.

In particular, according to the present exemplary embodiment, the DRM system 100 includes a content importing apparatus 10 which imports digital content, which is protected by the related art methods of copy control, the broadcast flag, and the FTA flag, as digital content complying with a rule of the DRM system 100 designed so that the rule can satisfy the security requirementsof content providers and service providers, and at the same time can satisfy the requirementsof content consumers for free usage of content.

The importing of content in the present exemplary embodiment is defined as a process that a license for content is generated and the content is encrypted according to the rule of the DRM system 100. That is, in the present exemplary embodiment, the importing of content is a process of converting a content file that does not comply with the rule of the DRM system 100 into a content file that complies with the rule of the DRM system 100. Also, in the present exemplary embodiment, re-importing of content means a process that the devices 21-23 receiving an already imported content file generate a new license based on the import type determined at the import process included in the content file. In the present exemplary embodiment, the content file is a file including digital content, and CCI or a license for the content. In particular, a person skilled in the art of the present exemplary embodiment will understand that the term, "a content file", can also be simply called "content".

A "usage bind" as used herein, essentially corresponds to a defined usage category or scope. Considered herein are at least two categories, the first where usage is confined to a particular device, which will be referred to as a "device-bound," and a second where usage is confined to a particular domain which may include a variety of devices, which will be referred to as a "domain-bound." Usage rule is a concept including usage rights, i.e., usage permission or constraints.

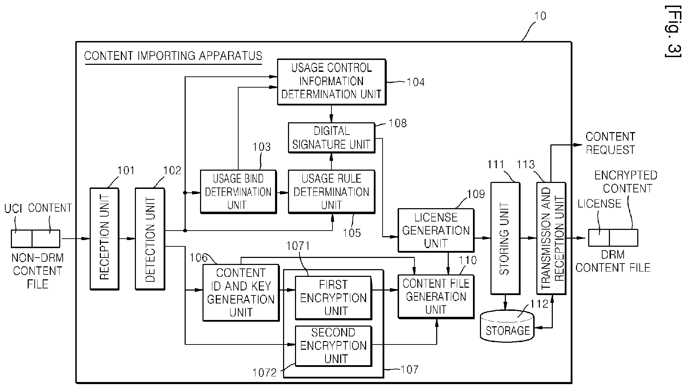

FIG. 3 illustrates a structure of the content importing apparatus 10 according to an embodiment. Referring to FIG. 3, the content importing apparatus 10 illustrated in FIG. 2 includes a reception unit 101, a detection unit 102, a usage bind determination unit 103, a usage control information determination unit 104, a usage rule determination unit 105, a content ID/key generation unit 106, an encryption unit 107, a first encryption unit 1071, a second encryption unit 1072, an digital signature unit 108, a license generation unit 109, a content file generation unit 110, a storing unit 111, a storage 112 and a transmission and reception unit 113.

The reception unit 101 receives a transmission stream through a variety of broadcast transmission channels. For example, the reception unit 101 may receive a transmission stream through a wireless medium such as a satellite and a ground base station, or through a wired medium such as the Internet, or through a recording medium such as a digital versatile disk (DVD).

The detection unit 102 detects the content file from the transmission stream received by the reception unit 101, and detects the digital content and usage constraints information (UCI) of this content from the content file. The content file detected by the detection unit 102 typically does not comply with the rule of the DRM system 100 and includes the related art CCI, broadcast flag, and FTA flag. As illustrated in FIG. 2, the content included in this content file may be protected by the DRM system 100 or may be protected by the related art HDCP system 100 or DTCP system 300. However, in order to protect the content included in this content file by the DRM system 100, the content file detected by the detection unit 102 should be imported as a content file complying with the rule of the DRM system 100.

Examples of the UCI may include related art CCI, the broadcast flag, and the FTA flag. As described above, the CCI is information to restrict the number of times digital content may be copied. The types of the CCI include "copy free", "copy once", "copy no more" and "copy never". Also, the broadcast flag is information indicating whether indiscriminant redistribution of the content is prohibited. The types of the broadcast flag include broadcast flag on and broadcast flag off. The FTA flag is used to manage FTA content broadcast by a content provider, i.e. a broadcaster, and is redistributed by a receiver after being received. The FTA flag reflects an intention of a content producer or a content provider, e.g., the broadcaster, regarding usage of the FTA content.

In particular, the FTA flag of the present exemplary embodiment is used to control a device located in a remote place from another device that receives content imported by the content importing apparatus 10 to remotely access the content over a network. The network may be the Internet. In light of the DVB standards, the FTA flag includes an 8 bit "descriptor_tag" set as 0X7E indicating the FTA flag, an 8 bit "descriptor_length" defining the whole byte number of a data portion of the FTA flag, a 1 bit "do_not_scramble" indicating whether content scrambling is applied for the purposes of content protection, a 2 bit "remote_access_over_internet" indicating a policy regarding redistribution of content over the Internet, i.e., information used to control remote access of content over the Internet, and a 1 bit "do_not_apply_revocation" indicating whether a content revocation process is applied to content. Although the content importing apparatus 10 and the devices 21-23 that have received the content imported by the content importing apparatus 10 are separated from each other in FIG. 2, the content importing apparatus 10 and the devices 21-23 may be designed as a single device.

However, since "copy no more" is CCI occurring when digital content is copied once, the DRM system 100 cannot receive digital content when the CCI indicates "copy no more", and as a result, the DRM system 100 cannot import the content. This is because the DRM system 100 is a content protection system which receives for the first time a transmission stream through a variety of broadcast transmission channels as illustrated in FIG. 2, and thus, the DRM system 100 cannot receive content when the CCI indicates "copy no more". Also, since "copy never" indicates a prohibition on copying the content, the DRM system 100 cannot copy content with the CCI which indicates "copy never", and as a result, cannot import content with the CCI which indicates "copy never". This is because in order to import digital content, the DRM system 100 should copy the content included in a content file which does not comply with the rule of the DRM system 100 and then include the copied content in a content file which complies with the rule of the DRM system 100.

Also, if the broadcast flag of content is broadcast flag off, indiscriminant redistribution of the content is permitted and protection of the content by the DRM system 100 is not needed. Accordingly, the DRM system 100 does not need to import the content with broadcast flag off. That is, according to the present exemplary embodiment, the content importing apparatus 100 does not import content when the CCI is "copy no more" or "copy never", or content with the broadcast flag being broadcast flag off. Accordingly, the case where the CCI of content is "copy no more" or "copy never", or the broadcast flag of content is broadcast flag off will be excluded in the following description of the exemplary embodiments.

If the FTA flag "do_not_scramble" is set to "0", scrambling is applied to content where applicable for content protection. If the FTA flag "do_not_scramble" is set to "1", scrambling is not applied to content for the purposes of content protection. In particular, if the FTA flag "do_not_scramble" is set to "0", i.e., if scrambling is applied to content, digital links are protected to transmit content according to HDCP, DTCP, etc. For example, if the content importing apparatus 10 receives content in which the FTA flag "do_not_scramble" is set to "0", scrambling may be applied to the content according to the HDCP, DTCP, etc., when the content importing apparatus 10 imports the content to a device. Also, when a device that receives content imported by the content importing apparatus 10 re-imports the content to another device, scrambling may be applied to the content according to the HDCP, DTCP, etc.

If the FTA flag "remote_access_over_internet" is set to "00", remote access to content is fully enabled by a device located in a remote place from the first device 21 that receives the content imported by the content importing apparatus 10. That is, if the FTA flag "remote_access_over_internet" is set to "00", the device located in the remote place from the first device 21 that receives the content imported by the content importing apparatus 10 enables remote access of the content owned by the first device 21 over the Internet without restrictions on a usage bind of the content. In this case, the content is viewed, copied, and moved by the first device 21 that receives the content imported by the content importing apparatus 10, and remote access to the content is freely enabled by the device located in the remote place, i.e., a fourth device 24, without restrictions on a usage bind of the content.

If the FTA flag "remote_access_over_internet" is set to "01", remote access to content is enabled within a managed domain by the device located in the remote place from the first device 21 that receives the content imported by the content importing apparatus 10. That is, if the FTA flag "remote_access_over_internet" is set to "01", the device located in the remote place from the first device 21 that receives the content imported by the content importing apparatus 10 enables remote accesses of the content owned by the first device 21 over the Internet within the managed domain. The managed domain of the present exemplary embodiment is a range within which usage of content can be controlled, for example, but not limited to, a set of devices belonging to a household shown in FIG. 2. That is, the managed domain is not a geographical region but a set of devices in the range within which usage of content can be controlled. For example, if one of devices belonging to the household shown in FIG. 2 is the fourth device 24, when the fourth device 24 is located in the remote place from the first device 21, remote access of the content owned by the first device 21 is enabled over the Internet.

In this case, the content is viewed, copied, and moved locally only by the first device 21 that receives the content imported by the content importing apparatus 10, and remote access to the content is enabled by the device located in the remote place within the managed domain, e.g., the fourth device 24. In this regard, "local" means a geographical region around the device that owns the content, for example, within the same immediate vicinity approximating to the physical extent of a domicile or vehicle. This implies the need for devices to determine whether a device is local to another device prior to applying the related usage rules. The definitions of the managed domain and "local" are subject to further refinement by compliance regimes including those of a content producer, a content provider, etc.

If the FTA flag "remote_access_over_internet" is set to "10", remote access to content is enabled within a managed domain after a specified long period of time by the device located in the remote place from the first device 21 that receives the content imported by the content importing apparatus 10. That is, if the FTA flag "remote_access_over_internet" is set to "10", the device located in the remote place from the first device 21 that receives the content imported by the content importing apparatus 10 enables remote access of the content owned by the first device 21 over the Internet within the managed domain after a specified long period of time. In this case, the content is viewed, copied, and moved locally only by the first device 21 that receives the content imported by the content importing apparatus 10, and remote access to the content is enabled by the device located in the remote place within the managed domain after a specified long period of time, e.g., the fourth device 24.

For example, the content is viewed, copied, and moved locally by the first device 21 that receives the content imported by the content importing apparatus 10 from the time of reception until 24 hours of the original broadcast after reception to protect live transmissions, and remote access to the content is enabled by the device located in the remote place after 24 hours delay time has expired. Devices that initially receive live transmission content may immediately use the content, whereas devices that access the content over the Internet may use the content after 24 hours delay time has expired, thereby preventing live transmission content from spreading in real time over the Internet.

If the FTA flag "remote_access_over_internet" is set to "11", remote access to content is not permitted by the device located in the remote place from the first device 21 that receives the content imported by the content importing apparatus 10. That is, if the FTA flag "remote_access_over_internet" is set to "11", the device located in the remote place from the first device 21 that receives the content imported by the content importing apparatus 10 does not enable remote access of the content owned by the first device 21 over the Internet. In this case, the content is viewed, copied, and moved locally only by the first device 21 that receives the content imported by the content importing apparatus 10. The prohibition of remote access by the device located in the remote place may be permitted to expire after a very long time defined by the compliance regimes including, but not limited to, the content producer, the content provider, etc.

If the FTA flag "do_not_apply_revocation" is set to "0", a content revocation process is applied to content. If the FTA flag "do_not_apply_revocation" is set to "1", the content revocation process is not applied to content. In particular, if the FTA flag "do_not_apply_revocation" is set to "0", i.e., if the content revocation process is applied to the content, usage of the content is not enabled by a specific device or a license corresponding to content revocation requirements. For example, if the content importing apparatus 10 receives content in which the FTA flag "do_not_apply_revocation" is set to "0", the content importing apparatus 10 may perform the content revocation process when importing the content to a device. The content importing apparatus 10 may perform the content revocation process when the device that receives the content imported by the content importing apparatus 10 re-imports or transmits the content to another device.

The usage bind determination unit 103 determines a usage bind of the content detected by the detection unit 102 based on the UCI detected by the detection unit 102 according to the rule of the DRM system 100. This will now be explained with an example in which the UCI detected by the detection unit 102 is CCI. That is, if the CCI detected by the detection unit 102 is "copy free", the usage bind determination unit 103 determines the usage bind of the content to be a device-bound which limits the usage bind of content to any one device or a domain-bound which limits the usage bind of the content to all devices included in any one domain. Also, if the CCI detected by the detection unit 102 is "copy once", the usage bind determination unit 103 determines the usage bind of the content to be a device-bound according to the rule of the DRM system 100.

Since "copy free" indicates that indiscriminant copying of content is permitted, the usage bind may be either of a device-bound and a domain-bound. However, since "copy once" indicates that only one time copying of the content is permitted, the usage bind can be only a device-bound. This is because if the usage bind of the content is determined as a domain-bound, free copying of the content among devices included in the domain should be permitted.

Next, an example in which the UCI detected by the detection unit 102 is the broadcast flag will now be explained. That is, if the broadcast flag detected by the detection unit 102 is broadcast flag on, the usage bind determination unit 103 determines the usage bind of the content to be a device-bound or a domain-bound according to the rule of the DRM system 100. Since if the broadcast flag is broadcast flag on, it indicates that indiscriminant redistribution of the content is not permitted, the usage bind may be a device-bound or a domain-bound. This is because the usage of the content within a device-bound complies with the prohibition of indiscriminant redistribution of the content, and since a domain-bound is a specified area that can be recognized by a user, the usage of the content within the domain-bound also complies with the prohibition of indiscriminant redistribution of the content.

Next, an example in which the UCI detected by the detection unit 102 is the FTA flag will now be explained. That is, the usage bind determination unit 103 determines the usage bind of the content detected by the detecting unit 102 according to whether remote access to the content detected by the detecting unit 102 is enabled based on the FTA flag among the UCI detected by the detection unit 102. In particular, if the FTA flag among the UCI detected by the detecting unit 102 indicates that remote access to the content detected by the detection unit 102 is enabled within a managed domain, the usage bind determination unit 103 determines the usage bind of the content detected by the detection unit 102 based on the managed domain. That is, the usage bind determination unit 103 determines the usage bind of the content detected by the detecting unit 102 within the managed domain. If the FTA flag among the UCI detected by the detection unit 102 indicates that the content detected by the detecting unit 102 is viewed, copied, and moved locally only, the usage bind determination unit 103 determines the usage bind of the content detected by the detecting unit 102 based on the local region. The usage bind determination unit 103 determines the usage bind of the content detected by the detection unit 102 within the local region.

For example, if the detection unit 102 detects the FTA flag that "remote_access_over_internet" is set to "00", the usage bind determination unit 103 determines the usage bind of the content to be the device-bound or the domain-bound according to the rules of the DRM system 100. In this case, since the content detected by the detection unit 102 is freely viewed, copied, moved, and remotely accessed without limitations on the usage bind of content, the usage bind may be either of the device-bound and the domain-bound. In particular, the usage bind of content may be determined to be the device-bound or the domain-bound based on the requirements of users for free usage of the content without considering the managed domain and local region.

If the detection unit 102 detects the FTA flag that "remote_access_over_internet" is set to "01", the usage bind determination unit 103 determines the usage bind of the content to be the device-bound or the domain-bound according to the rules of the DRM system 100. In this case, since the content detected by the detection unit 102 is viewed, copied, and moved locally only, and remote access of the content is enabled within the managed domain, the usage bind may be either of the device-bound and the domain-bound. The device-bound or the domain-bound may be established within the local region and managed domain defined by the FTA flag. That is, the device-bound or the domain-bound may not include a device beyond the local region or a device other than the set of devices belonging to the household shown in FIG. 2.

If the detection unit 102 detects the FTA flag that "remote_access_over_internet" is set to "10", the usage bind determination unit 103 determines the usage bind of the content to be the device-bound or the domain-bound according to the rules of the DRM system 100. In this case, since the content detected by the detection unit 102 is viewed, copied, and moved locally only, and remote access of the content is enabled within the managed domain after a specified long period of time, the usage bind may be either of the device-bound and the domain-bound. The device-bound or the domain-bound may be established within the local region and managed domain defined by the FTA flag.

If the detection unit 102 detects the FTA flag that "remote_access_over_internet" is set to "11", the usage bind determining unit 103 determines the usage bind of the content to be the device-bound or the domain-bound according to the rules of the DRM system 100. In this case, since the content detected by the detecting unit 102 is viewed, copied, and moved locally only, the usage bind may be either of the device-bound and the domain-bound. The device-bound or the domain-bound may be established within the local region defined by the FTA flag.

Generally, since which domain is composed of devices which are preset by a user, a domain-bound can also be expressed as a user-bound. Also, as described above, since the rule of the DRM system 100 is determined in a manner such that the rule can satisfy the security requirement of content owners, content providers and service providers, and at the same time can satisfy the requirement of content consumers for free usage of content, the usage bind determination unit 103 determines the usage bind of the content as a device-bound or a domain-bound in this manner. However, the device-bound is determined only when the domain-bound violates the UCI, because the content usage right of a user can be restricted.

The usage control information determination unit 104 determines usage control information (content control information) of the content detected by the detection unit 102 based on the UCI detected by the detection unit 102 according to the rule of the DRM system 100. More specifically, the usage control information determination unit 104 determines usage control information of the content with respect to each usage bind determined by the usage bind determination unit 103. If the usage bind determined by the usage bind determination unit 103 is a device-bound, the usage control information determination unit 104 determines usage control information of the content in any one device. If the usage bind determined by the usage bind determination unit 103 is a domain-bound, the usage control information determination unit 104 determines usage control information of the content in any one domain.

In particular, the usage control information determination unit 104 determines the usage control information of the content detected by the detection unit 102 according to whether scrambling is applied to the content, remote access to the content is enabled, the content revocation process is applied to the content, etc., based on the FTA flag among the UCI detected by the detection unit 102. More specifically, the usage control information determination unit 104 determines the usage control information of the content detected by the detecting unit 102 according to a one bit value of the FTA flag among the UCI detected by the detection unit 102 indicating whether scrambling is applied to the content. That is, the usage control information determination unit 104 determines the usage control information of the content detected by the detecting unit 102 according to the one bit value so that digital links are protected to transmit the content according to HDCP, DTCP, etc.

If the FTA flag among the UCI detected by the detection unit 102 is one of various types of remote access to the content detected by the detection unit 102, the usage control information determination unit 104 determines the usage control information of the content detected by the detecting unit 102 according to the type. That is, the usage control information determination unit 104 determines the usage control information of the content detected by the detecting unit 102 so that remote access to the content corresponding to the type is enabled. If the FTA flag among the UCI detected by the detection unit 102 indicates that remote access to the content detected by the detecting unit 102 is enabled at a specified long period of time, the usage control information determination unit 104 determines the usage control information of the content detected by the detecting unit 102 according to the specified long period of time. That is, the usage control information determination unit 104 determines the usage control information of the content detected by the detecting unit 102 so that remote access to the content is enabled at the specified long period of time.

For example, if the detection unit 102 detects the FTA flag that "remote_access_over_internet" is set to "00", the usage control information determination unit 104 determines the usage control information of the content detected by the detecting unit 102 so that remote access to the content is freely enabled. If the detection unit 102 detects the FTA flag that "remote_access_over_internet" is set to "01", the usage control information determination unit 104 determines the usage control information of the content detected by the detecting unit 102 so that remote access to the content is enabled within a managed domain. If the detection unit 102 detects the FTA flag that "remote_access_over_internet" is set to "10", the usage control information determination unit 104 determines the usage control information of the content detected by the detecting unit 102 so that remote access to the content is enabled within the managed domain at the specified long period of time. If the detection unit 102 detects the FTA flag that "remote_access_over_internet" is set to "11", the usage control information determination unit 104 determines the usage control information of the content detected by the detecting unit 102 so that remote access to the content is not enabled. Determining of the usage control information of the content within the managed domain and local region defined by the FTA flag may be solved by determining the usage control information of the content within the usage bind of content within the managed domain and local region.

The usage control information determination unit 104 determines the usage control information of the content detected by the detecting unit 102 according to a one bit value indicating whether the content revocation process is applied to the content. That is, the usage control information determination unit 104 determines the usage control information of the content detected by the detecting unit 102 so that usage of the content is not enabled by a specific device or a license corresponding to content revocation requirements according to the one bit value.

Since the rule of the DRM system 100 is determined in a manner such that the rule can satisfy the security requirements of content providers and service providers, and at the same time can satisfy the requirements of content consumers for free usage of content, the usage control information determination unit 104 determines the usage control information of the content consistent with this manner. In particular, the usage control information determination unit 104 determines the usage control information of the content in a manner such that the rule can satisfy the restriction requirements of remote access to the content of content producers and content providers and at the same time can satisfy the requirements of content consumers for free usage of content.

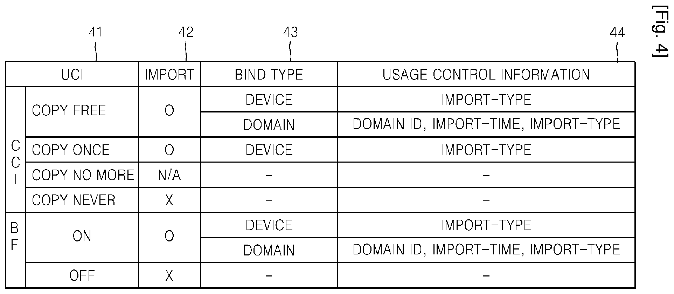

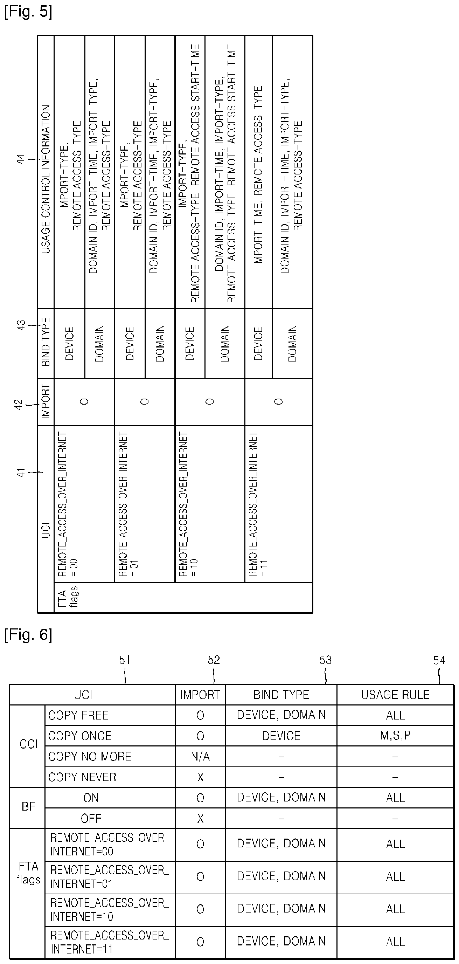

FIGS. 4 and 5 are mapping tables of the UCI and the usage control information according to an exemplary embodiment.

Referring to FIGS. 4 and 5, the mapping tables of the UCI and the usage control information include a UCI field 41, an import field 42, a usage bind field 43, and a usage control information field 44.

In the UCI field 41, the UCI is recorded. In the import field 42, a value is recorded that indicates whether the content having the UCI recorded in the UCI field 41 can be imported. In the bind type field 43, a usage bind based on the UCI recorded in the UCI field is recorded. In the usage control information field 44, user control information based on the UCI recorded in the UCI field 41 with respect to each usage bind recorded in the bind type field 43, is recorded.

In particular, among the values recorded in the usage control information field 44, "domain ID" indicates any one domain. A device 21-23 that receives an imported content file determines, with reference to this domain ID, whether the device is included in a domain corresponding to the usage bind of the content included in the imported file. That is, if the device 21-23 that receives the imported content file is registered in the domain corresponding to the domain ID, the device determines that the device is included in the domain corresponding to the usage bind of the content included in this content file.

Also, among the values recorded in the usage control information field 44, "import-time" indicates a time to issue a license according to the present exemplary embodiment. That is, "import-time" indicates a time when the content file is imported as a content file complying with the rule of the DRM system 100. The device 21 receiving the content file determines, with reference to this import time, whether a membership for the domain corresponding to the usage bind of the content included in this content file has expired. That is, if this import time is within a valid term of the membership for the domain corresponding to the usage bind of the content included in this content file, the device 21 determines that the membership has not expired.

Also, among the values recorded in the usage control information field 44, "import-type" indicates the inherited bind type of content based on the UCI associated with the content which provides information to determine the bind type of the content included in a new license according to the present exemplary embodiment. That is, when a content file including UCI is imported as a content file including a license and then, a content file is re-imported from the content file including this license, the value "import-type" indicates the inherited bind type of content included in the re-imported content file. The device 21 receiving the content file determines the usage bind of content included in the new license with reference to this import type when the already imported content file is re-imported. That is, if the import type is of the value user-specific to indicate the bind type as domain bound, the device 21 receiving the content file determines the usage bind of the content included in the content file re-imported from the already imported content file as a domain-bound.

Also, among the values recorded in the usage control information field 44, "remote access-type" indicates any one of various types of remote access of the content included in the imported content file of the present exemplary embodiment. A device located in a remote place from the device 21 that receives the imported content file determines whether remote access of content owned by the first device 21 is enabled over the Internet with reference to the "remote access-type". For example, if the FTA flag "remote_access_over_internet" is set to "00", "01" and "10", the device located in the remote place of the device 21 determines that remote access of the content owned by the first device 21 is enabled over the Internet. However, the "remote access-type" is valid on the proposition that the device-bound or the domain-bound does not violate the local region and managed domain defined by the FTA flag.

Also, among the values recorded in the usage control information field 44, "remote access start-time" indicates a time for starting remote access of the content included in the imported content file of the present exemplary embodiment. The device located in the remote place from the device 21 that receives the imported content file determines the time for starting remote access of the content owned by the first device 21 with reference to the "remote access start-time". For example, the device located in the remote place from the device 21 may start remote access of the content after 24 hours from the time of reception of the original broadcast. However, the "remote access start-time" is valid on the proposition that the device located in the remote place from the device 21 enables remote accesses of the content owned by the first device 21 over the Internet.

The usage rule determination unit 105 determines a usage rule of the content detected by the detection unit 102 based on the UCI detected by the detection unit 102 according to the rule of the DRM system 100. More specifically, the usage rule determination unit 105 determines a usage rule of the content with respect to each usage bind determined by the usage bind determination unit 103. If the usage bind determined by the usage bind determination unit 103 is a device-bound, the usage rule determination unit 105 determines a usage rule of the content in any one device. If the usage bind determined the usage bind determination unit 103 is a domain-bound, the usage rule determination unit 105 determines a usage rule of the content in any one domain.

In particular, the usage rule determination unit 105 determines the usage rule of the content detected by the detection unit 102 based on the FTA flag among the UCI detected by the detection unit 102 according to whether the content detected by the detection unit 102 is viewed, copied, and moved locally only. More specifically, if the FTA flag among the UCI detected by the detection unit 102 indicates that the content detected by the detection unit 102 is viewed, copied, and moved locally only, the usage rule determination unit 105 determines the usage rule of the content detected by the detection unit 102 based on the local region. That is, the usage rule determination unit 105 determines the usage rule of the content detected by the detection unit 102 within the local region. Determining of the usage rule of the content within the local region defined by the FTA flag may be solved by determining the usage rule of the content within the usage bind of content within the local region.

For example, if the detection unit 102 detects the FTA flag that "remote_access_over_internet" is set to "00", the usage rule determination unit 105 determines the usage rule of the content detected by the detection unit 102 so that the content is freely viewed, copied, and moved. If the detection unit 102 detects the FTA flag that "remote_access_over_internet" is set to "01", "10" and "11", the usage rule determination unit 105 determines the usage rule of the content detected by the detection unit 102 so that the content is viewed, copied, and moved locally only.

Since the rule of the DRM system 100 is determined such that the rule can satisfy the security requirements of content owners, content providers and service providers, and at the same time can satisfy the requirements of content consumers for free usage of content, the usage rule determination unit 105 determines the usage rule of the content in this manner.

FIG. 6 illustrates a mapping table of UCI and usage rules according to an exemplary embodiment. Referring to FIG. 6, the mapping table of UCI and usage control information of the present exemplary embodiment includes a UCI field 51, an import filed 52, a usage type field 53, and a usage rule field 54. As described above, the usage control information and usage rule of content are determined based on the UCI detected by the detecting unit 102. The usage control information and usage rules are used to satisfy the security requirements of content providers and service providers, and at the same time can satisfy the requirements of content consumers for free usage of content, beyond the limited content protection by the related art CCI, broadcast flag, FTA flag, and the like. Therefore, the usage control information and usage rule may be referred to as a single term such as the usage rule or a term similar to the usage rule.

UCI is recorded in the UCI field 51. In the import field 52, a value is recorded that indicates whether the content having the UCI recorded in the UCI field 51 can be imported. In the bind type field 53, a usage bind based on the UCI recorded in the UCI field is recorded. In the usage rule field 54, a usage rule is recorded and is based on the UCI recorded in the UCI field with respect to the usage bind recorded in the bind type field 53.

In particular, among values recorded in the usage rule field 54, "all" indicates that all types of usages of content are permitted. Also, among values recorded in the usage rule field 54, "M" indicates moving of content. The moving of the content means that the content stored in any one device is deleted or the usage of the content is prohibited when the content is stored in another device. Also, among values recorded in the usage rule field 54, "S" indicates streaming of content. The streaming of the content means that the content stored in any one device is temporarily output to another device but the content is continuously stored in the original device. Also, among values recorded in the usage rule field 54, "P" indicates playing of the content. The playing of the content means that any one device plays the content.

Since "copy free" indicates that indiscriminant copying of content is permitted, if the UCI is "copy free", device and domain are recorded in the bind type field 53 and "all" is recorded in the usage rule field 54. Meanwhile, since "copy once" indicates that only one time copying of content is permitted, if the UCI is "copy once", device is recorded in the bind type field 53 and "M, S, P" is recorded in the usage rule field 54.

In addition to the moving, streaming and playing, examples of using content includes copying content. The copying of content means that content imported according to the exemplary embodiment is copied. However, in order for the content importing apparatus 10 to import the content, copying of the content is required as a prerequisite and as a result, if the content imported according to the present exemplary embodiment is copied, the of copying occurs twice. Accordingly, though the content importing apparatus 10 can import content with the UCI being "copy once", the content importing apparatus 10 cannot permit copying of the content. This is the reason why only "M, S, P" is recorded in the usage rule field 54 when the UCI is "copy once".

Since broadcast flag on indicates that indiscriminant redistribution of content is not permitted, if the broadcast flag is broadcast flag on, device and domain are recorded in the bind type field 53 and "all" is recorded in the usage rule field 54. Any type of usage in a device-bound, including copying of content, complies with the prohibition of indiscriminant redistribution of the content, and since a domain-bound is a specified area that can be recognized by a user, any type of usage in the domain-bound, including copying of the content, complies with the prohibition of indiscriminant redistribution of the content.

If the FTA flag "remote_access_over_internet" is set to "00", "01" and "10", since the content is viewed, copied, and moved by the first device 21 that receives the content imported by the content importing apparatus 10, device and domain are recorded in the usage type field 53, and "all" is recorded in the usage rule field 54. However, the device-bound or the domain-bound does not violate the local region and managed domain defined by the FTA flag. The usage rule recorded in the usage rule field 54 may include a usage rule regarding the content owned by the first device 21 and used by the fourth device 24 located in the remote place of the first device 21 that receives the content imported by the content importing apparatus 10 over the Internet. Furthermore, the usage rule regarding the content owned by the first device 21 and used by the fourth device 24 located in the remote place from the first device 21 that receives the content imported by the content importing apparatus 10 over the Internet may be further recorded in the usage rule field 54.

The content ID/key generation unit 106 generates the ID of content detected by the detection unit 102 according to the rule of the DRM system 100 and generates a content key corresponding to this content ID. The content key generated by the content ID/key generation unit 106 is used to encrypt the content detected in the detection unit 102.

The encryption unit 107 selectively encrypts the content detected by the detection unit 102 according to the rule of the DRM system 100 based on the UCI detected by the detection unit 102. That is, if the CCI is "copy no more", or "copy never", or the broadcast flag is broadcast flag off, the content import apparatus 10 does not import the content, and therefore the encryption unit 106 does not encrypt the content detected by the detection unit 102. The encryption unit 106 includes the first encryption unit 1071 for encrypting a content key and the second encryption unit 1072 for encrypting content.

The first encryption unit 1071 encrypts the content key generated by the content ID/ key generation unit 106 with an encryption key corresponding to a usage bind determined by the usage bind determination unit 103. If the usage bind determined by the usage bind determination unit 103 is a device-bound, the first encryption unit 1071 encrypts the content key with an encryption key (hereinafter referred to as a "device key") corresponding to any one device. If the usage bind determined by the usage bind determination unit 103 is a domain-bound, the first encryption unit 1071 encrypts the content key with an encryption key (hereinafter referred to as a "domain key") corresponding to any one domain.

Accordingly, among devices which receive the content imported by the content import apparatus 10, only a device having a device key or domain key used to encrypt the content keys can decrypt the content keys encrypted by the first encryption unit 1071. Through this encryption process only users authorized for the content can be selectively allowed to use the content and the danger of the content being illegally redistributed or used by many and unspecified persons can be effectively prevented.

For example, in order to allow only a device or domain selected by a user to obtain a content key, the first encryption unit 1071 only needs to encrypt the content key with a device key corresponding to a device selected by the user or with a domain key corresponding to a domain selected by the user. However, the first encryption unit 1071 should know which device corresponds to which encryption key, and information on this relation can be obtained from a server, such as a domain manager (not shown).

The second encryption unit 1072 encrypts the content detected by the detection unit 102 with the content key generated by the content ID/key generation unit 106.

The digital signature unit 108 digitally signs the usage control information determined by the usage control information determination unit 104, and the usage rule determined by the usage rule determination unit 105 according to the rule of the DRM system 100. Generally, an digital signature is used to guarantee that a document or message is not falsified. If the usage control information determined by the usage control information determination unit 104, and the usage rule determined by the usage rule determination unit 105 are falsified, the security requirements of content owners, content providers and service providers cannot be satisfied and as a result, the content protection function of the DRM system 100 fails to operate correctly.

The license generation unit 109 generates a license including the content ID generated by the content ID/key generation unit 106, the content key encrypted by the first encryption unit 1071, and the usage control information and usage rule digitally signed by the digital signature unit 108. More specifically, the license generation unit 109 generates the license including the usage rule determined by the usage rule determination unit 105 with respect to each usage bind determined by the usage bind determination unit 103. If the usage bind determined by the usage bind determination unit 103 is a device-bound, the license generation unit 109 generates a license for any one device. If the usage bind determined by the usage bind determination unit 103 is a domain-bound, the license generation unit 109 generates a license for any one domain.

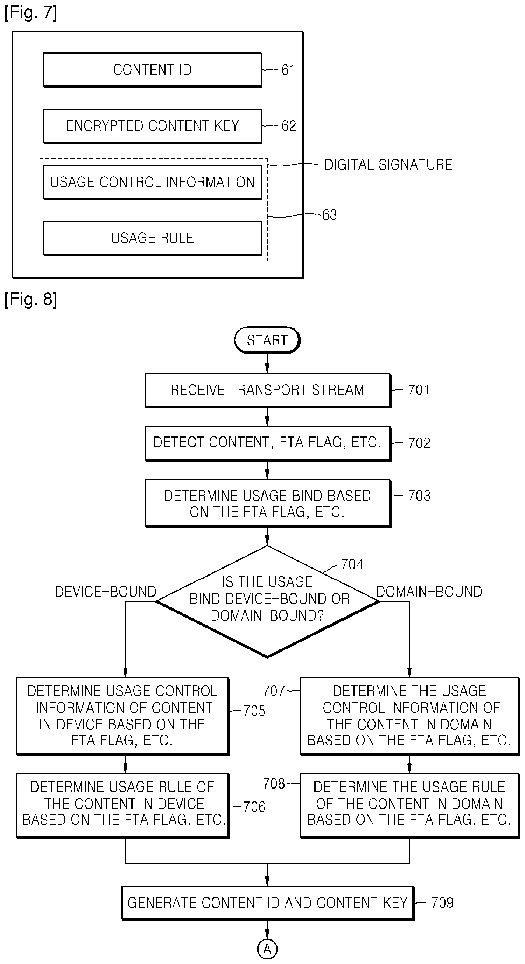

FIG. 7 illustrates a format of a license according to an exemplary embodiment. Referring to FIG. 7, the license includes a content ID 61, an encrypted content key 62, digitally signed usage control information and usage rules 63. A device which receives the content imported by the content importing apparatus 10 can identify the content imported by the content importing apparatus 10 by referring to the content ID 61 of the license illustrated in FIG. 7. Also, in order to obtain the identified content, the device which receives the content imported by the content importing apparatus 10 attempts to decrypt the encrypted content key 62 of the license illustrated in FIG. 7. As described above, among devices receiving the content imported by the content importing apparatus 10, only a device having the device key or domain key used to encrypt the content key can decrypt the encrypted content key 62. Also, the device receiving the content imported by the content importing apparatus 10 decrypts the content with the key restored through the decryption. This is because the content imported by the content importing apparatus 10 is in an encrypted form as described above.

Also, the device receiving the content imported by the content import apparatus 10 confirms whether the digitally signed usage control information and usage rule 63 of the license illustrated in FIG. 7 is falsified. As a result, if it is confirmed that the digitally signed usage control information and usage rule 63 are not falsified, it is confirmed, based on the usage control information, whether the user is authorized for the content. That is, the device receiving the content imported by the content import apparatus 10 confirms with reference to the domain ID and the import time included in the usage control information whether the user is authorized for the content in relation to the domain corresponding to the usage bind of the content. As a result, if it is confirmed that the user is authorized for the content, the device receiving the content imported by the content import apparatus 10 uses the content according to the usage rule included in the license illustrated in FIG. 7. Accordingly, the security requirements of content owners, content providers and service providers can be satisfied and at the same time the requirements of content consumers for free usage of the content can be satisfied sufficiently.

The content file generation unit 110 generates a content file complying with the usage rule determined by the usage rule determination unit 105 according to the rule of the DRM system 100. This is to allow the device receiving the content imported by the content import apparatus 10 to use the content complying with the usage rule determined by the usage rule determination unit 105. As described above, the usage rule determined by the usage rule determination unit 105 is inserted into the license issued by the license generation unit 109. That is, the content file generation unit 110 generates a content file including the license issued by the license generation unit 109 and the content encrypted by the second encryption unit 1072. However, the license issued by the license generation unit 109 and the content encrypted by the second encryption unit 1072 may be packaged as one unit or as separate units.

The storing unit 111 stores the content file generated by the content file generation unit 110 in the storage 112.

If a request from any one of the devices 21-23 illustrated in FIG. 2 to transmit the content to the device is received, the transmission and reception unit 113 transmits the content file stored in the storage 112 to this device. The transmission and reception unit 111 may transmit the content file in an arbitrary method that the device supports. For example, the content may be transmitted through a storage medium, such as a secure digital (SD) card, or according to a transmission protocol, such as a real-time transport protocol (RTP).

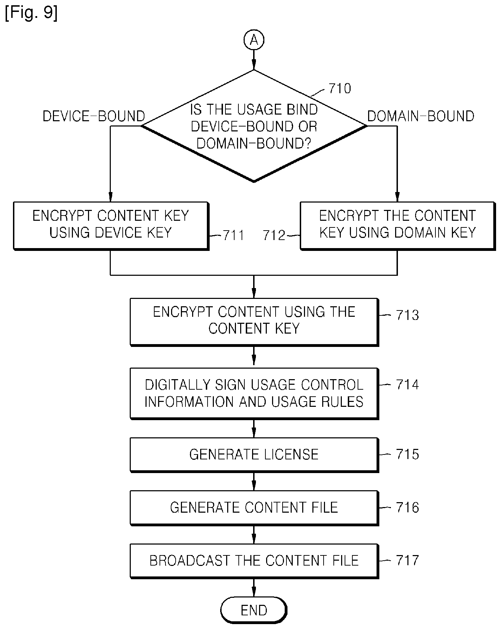

FIGS. 8 and 9 are flowcharts illustrating a content importing method according to an exemplary embodiment. Referring to FIGS. 8 and 9, the content importing method according to an exemplary embodiment includes operations time-serially processed by the content importing apparatus 10. Thus, although not described, the description with regard to the content importing apparatus 10 shown in FIG. 3 is applied to the content importing method of the present exemplary embodiment.

In operation 701, the content import apparatus 10 receives a transmission stream through a variety of broadcast transmission channels.

In operation 702, the content import apparatus 10 detects any one content file from the transmission stream received in operation 701, and detects any one piece of digital content and UCI with respect to this content from the content file. Examples of the UCI include related art CCI, broadcast flags, FTA flags, and the like.

In operation 703, the content importing apparatus 10 determines the usage bind of the content detected by the detection unit 102 based on the UCI detected by the detection unit 102 according to the rule of the DRM system 100. In particular, the content importing apparatus 10 determines the usage bind of the content detected in operation 702 according to whether remote access of the content detected in operation 702 is enabled based on an FTA flag of the UCI detected in operation 702.

In operation 704, the content importing apparatus 10 proceeds with operation 705 if the usage bind determined in operation 703 is a device-bound, and proceeds with operation 707 if the usage bind determined in operation 703 is a domain-bound.

In operation 705, the content importing apparatus 10 determines usage control information of the content in any one device based on the UCI detected in operation 702 according to the rule of the DRM system 100. In particular, the content importing apparatus 10 determines the usage control information of the content detected in operation 702 in any one device whether remote access of the content detected in operation 702 is enabled based on the FTA flag of the UCI detected in operation 702.

In operation 706, the content importing apparatus 10 determines a usage rule of content in any one device based on the UCI detected in operation 702 according to the rule of the DRM system 100. In particular, the content importing apparatus 10 determines the usage rule of the content in any one device whether the content detected in operation 702 is viewed, copied, and moved locally only based on the FTA flag of the UCI detected in operation 702.

In operation 707, the content importing apparatus 10 determines usage control information of the content in any one domain based on the UCI detected in operation 702 according to the rule of the DRM system 100. In particular, the content importing apparatus 10 determines the usage control information of the content detected in operation 702 in any one domain whether remote access of the content detected in operation 702 is enabled based on the FTA flag of the UCI detected in operation 702.

In operation 708, the content importing apparatus 10 determines a usage rule of content in any one domain based on the UCI detected in operation 702 according to the rule of the DRM system 100. In particular, the content importing apparatus 10 determines the usage rule of the content in any one domain whether the content detected in operation 702 is viewed, copied, and moved locally only based on the FTA flag of the UCI detected in operation 702.

In operation 709, the content importing apparatus 10 generates the ID of the content detected in operation 702 and generates a content key corresponding to the content ID according to the rule of the DRM system 100.

In operation 710, the content importing apparatus 10 proceeds with operation 711 if the usage bind determined in operation 703 is the device-bound, and proceeds with operation 712 if the usage bind determined in operation 703 is the domain-bound.

In operation 711, the content importing apparatus 10 encrypts the content key with a device key corresponding to any one device according to the rule of the DRM system 100.

In operation 712, the content importing apparatus 10 encrypts the content key with a domain key corresponding to any one domain according to the rule of the DRM system 100.

In operation 713, the content importing apparatus 10 encrypts the content detected in operation 702 using the content key generated in operation 709 according to the rule of the DRM system 100.

In operation 714, the content importing apparatus 10 digitally signs the usage control information determined in operations 705 and 707 and the usage rule determined in operations 706 and 708 according to the rule of the DRM system 100.

In operation 715, the content importing apparatus 10 generates and issues a license including the content ID generated in operation 709, the content key encrypted in operations 711 and 712, and the usage control information and usage rule digitally signed by the digital signature unit 108.

In operation 716, the content importing apparatus 10 generates a content file following the usage rule determined in operations 706 and 708 based on the usage control information determined in operations 705 and 707 according to the rule of the DRM system 100. That is, the content importing apparatus 10 generates the content file including the license issued in operation 715 and the content encrypted in operation 713.

In operation 717, the content importing apparatus 10 broadcasts the content file generated in operation 716.

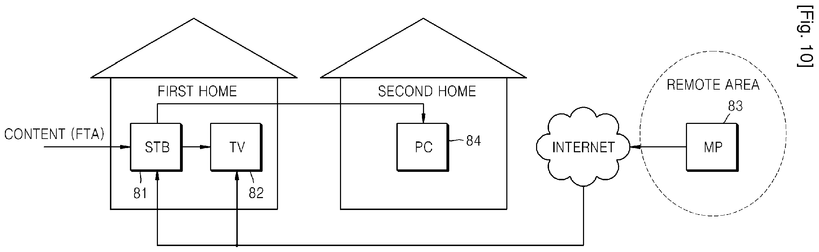

FIG. 10 illustrates a home network environment to which the DRM system 100 is applied according to an exemplary embodiment. Referring to FIG. 10, the DRM system 100, i.e., the content importing apparatus 10, is mounted in a set top box 81 of a first home. A managed domain of a FTA flag includes devices, i.e., a television (TV) 82 and a mobile phone 83, used by family members resident in the first home. A local region of the FTA flag includes the first home and a second home. The TV 82 is in the first home, and a personal computer (PC) 84 is in the second home.

If the set top box 81 receives FTA content from a broadcaster, the set top box 81 imports the FTA content to content following the rule of the DRM system 100 based on an FTA flag included in the FTA content. If the FTA flag "remote_access_over_internet" is set to "00", a usage rule indicating that content is freely viewed, copied, moved, and remotely accessed within a domain-bound including the TV 82, the mobile phone 83, the PC 84, and optional devices will be recorded in a license of the content file output by the set top box 81. In this case, the domain-bound is not limited to a specific device such as the TV 82, the mobile phone 83, the PC 84, etc., and may include an optional device that is to use the content imported by the set top box 81. The mobile phone 83 or another device located in a remote place from the TV 82 that receives the content imported by the set top box 81 may remotely access content owned by the TV 82 over the Internet, and the TV 82 and the PC 84 may use the content imported by the set top box 81. If the set top box 81, i.e., the content importing apparatus 10, is included in the domain-bound as a device, the mobile phone 83 or another optional device may remotely access the content owned by the set top box 81. The same is applied hereinafter.

If the FTA flag "remote_access_over_internet" is set to "01", values indicating that content is freely viewed, copied, moved, and remotely accessed within a domain-bound including the TV 82, the mobile phone 83, and the PC 84 will be recorded in the license of the content file output by the set top box 81. The mobile phone 83 located in the remote place from the TV 82 that receives the content imported by the set top box 81 may remotely access the content owned by the TV 82 over the Internet, and the TV 82 and the PC 84 may use the content imported by the set top box 81. If the FTA flag "remote_access_over_internet" is set to "10", values indicating that content is viewed, copied, and moved within the domain-bound including the TV 82, the mobile phone 83, and the PC 84, and remote access of content is enabled at a specified long period of time will be recorded in the license of the content file output by the set top box 81. The mobile phone 83 located in the remote place from the TV 82 that receives the content imported by the set top box 81 may remotely access the content owned by the TV 82 over the Internet after 24 hours from the time of reception of the content, and the TV 82 and the PC 84 may use the content imported by the set top box 81. If the FTA flag "remote_access_over_internet" is set to "11", values indicating that content is viewed, copied, and moved within the domain-bound including the TV 82 and the PC 84 will be recorded in the license of the content file output by the set top box 81. The TV 82 and the PC 84 that receive the content imported by the set top box 81 may use the content imported by the set top box 81.

As described above, according to the present invention, content which does not comply with the rule of a DRM system is imported as content complying with the rule of the DRM system. Thus, the content can be protected while being responsive to the demand of users for free usage, and only users authorized for the content can be allowed to use the content. As a result, the danger of content being illegally redistributed or used by many and unspecified persons can be prevented. In particular, according to the present invention, based on usage constraint information included in a content file received from the outside, for example, the FTA flag, the usage rule of the content included in this content file is determined and a content file complying with this usage rule is generated. In addition to the limited content protection by the related art FTA flag, the security requirements of content creators and content providers can be satisfied and at the same time the requirements of content consumers for free usage can be satisfied sufficiently.

The exemplary embodiments according to the present invention can be embodied as a computer readable program, and realized in a general-purpose computer capable of executing the program via a computer readable recoding medium. Also, the data structures used in the above embodiments can be recorded on a computer readable medium via various devices.

Examples of the computer readable recording medium include a magnetic storage medium, e.g., read-only memory (ROM), a floppy disk, and a hard disc; an optical recording medium, e.g., a CD-ROM, a digital versatile disc (DVD).

While the exemplary embodiment has been particularly shown and described with reference to exemplary embodiments thereof, it will be understood by those of ordinary skill in the art that various changes in form and details may be made therein without departing from the scope of the present invention as defined by the following claims.

## Claims

1. A method of importing a first content file into a second content file, the method comprising:
determining a usage rule of content included in the first content file based on information used to control remote access of the content included in the first content file; and
generating the second content file that follows the determined usage rule;
determining usage control information of the content included in the first content file according to whether remote access of the content is enabled;
wherein the generating of the second content file comprises generating the second content file including the determined usage control information and the determined usage rule;
**characterised in that** the usage control information is determined according to the usage control information included in the first content file which is used to control remote access over the Internet of the content; and
wherein the usage control information included in the first content file indicates:
a type of remote access over the Internet of the content among various types of remote access over the Internet of the content; and
in response to the usage control information included in the first content file indicating that remote access over the Internet of the content is enabled after a period of time of specified length, determining the usage control information according to the period of time of specified length.

2. The method of claim 1, further comprising determining a usage bind of the content according to whether remote access over the Internet to the content is enabled;
wherein the determining the usage bind comprises determining the usage rule according to the determined usage bind.

3. The method of claim 2, wherein the determining the usage-bind comprises:
if the information indicates that remote access over the Internet of the content is enabled within a managed domain, determining the usage bind of the content based on the managed domain.

4. The method of claim 2, wherein the determining the usage bind comprises:
if the information indicates that the content is viewed, copied, and moved locally only, determining the usage bind of the content based on the local region.

5. The method of claim 2, wherein the determining the usage bind comprises determining the usage bind of the content to be a device-bound that limits one device or a domain-bound that limits all devices included in any one domain;
wherein the determining of the usage rule comprises:
if the usage bind of the content is determined to be the device-bound, determining the usage rule of the content in any one device, and if the usage bind of the content is determined to be the domain-bound, determining the usage rule of the content in any one domain.

6. The method of claim 2, further comprising:
encrypting a content key with an encryption key corresponding to the determined usage bind; and
encrypting the content with the content key;
wherein the generating the second content file comprises:
generating the second content file including the usage rule, the encrypted content key, and the encrypted content.

7. The method of any preceding claim, wherein the determining of the usage rule comprises determining the usage rule of the content according to whether the content is viewed, copied, and moved locally only.

8. The method of claim 7, wherein the determining of the usage rule further comprises:
if the information indicates that the content is viewed, copied, and moved locally only, determining the usage rule of the content according to the local region.

9. The method of any preceding claim, wherein the information used to control remote access over the Internet of the content included in the first content file is used to control a second device located in a remote place from a first device that receives the second content file to remotely access of the content over a network.

10. The method of claim 2, wherein:
the determining the usage bind further comprises:
determining the usage bind of the content to be a device-bound that limits a plurality of devices predetermined by a user; and
wherein the determining of the usage rule comprises:
determining the usage rule of the content in the plurality of devices.

11. A computer readable recording medium having stored thereon a program for causing a computer to execute a method of importing a first content file into a second content file; wherein the method is as set forth in any preceding claim.

12. An apparatus for importing a first content file into a second content file, the apparatus comprising:
a usage rule determining unit (102) which determines a usage rule of content included in the first content file based on information used to control remote access of the content included in the first content file; and
a content file generating unit (110) which generates the second content file that follows the determined usage rule;
**characterised in that:**
a usage control information determining unit (104) is arranged to use the information used to control remote access of the content included in the first content file to control a second device located in a remote place from a first device that receives the second content file to remotely access the content over the Internet,
wherein the usage control information included in the first content file indicates:
a type of remote access over the Internet of the content among various types of remote access over the Internet of the content; and
in response to the usage control information included in the first content file indicating that remote access over the Internet of the content is enabled after a period of time of specified length, the usage control information determining unit (103) being configured to determine the usage control information according to the period of time of specified length.

## Patentansprüche

1. Verfahren zum Importieren einer ersten Inhaltsdatei in eine zweite Inhaltsdatei, das Verfahren umfassend:
Bestimmen einer Nutzungsregel von Inhalt, der in der ersten Inhaltsdatei enthalten ist, basierend auf Informationen, die zur Steuerung eines Fernzugriffs auf den Inhalt, der in der ersten Inhaltsdatei enthalten ist, verwendet werden; und
Erstellen der zweiten Inhaltsdatei, die den bestimmten Nutzungsregeln folgt;
Bestimmen von Nutzungssteuerungsinformationen des Inhalts, der in der ersten Inhaltsdatei enthalten ist, abhängig davon, ob ein Fernzugriff auf den Inhalt freigegeben ist oder nicht;
wobei das Erstellen der zweiten Inhaltsdatei ein Erstellen der zweiten Inhaltsdatei, enthaltend die bestimmten Nutzungssteuerungsinformationen und die bestimmte Nutzungsregel, umfasst;
**dadurch gekennzeichnet, dass** die Nutzungssteuerungsinformationen gemäß den Nutzungssteuerungsinformationen bestimmt werden, die in der ersten Inhaltsdatei enthalten sind, die zum Steuern des Fernzugriffs über das Internet auf den Inhalt verwendet wird; und
wobei die Nutzungssteuerungsinformationen, die in der ersten Inhaltsdatei enthalten sind, angeben:
eine Art von Fernzugriff über das Internet auf den Inhalt unter verschiedenen Arten von Fernzugriff über das Internet auf den Inhalt; und
in Antwort auf die Nutzungssteuerungsinformationen, die in der ersten Inhaltsdatei enthalten sind, die angeben, dass ein Fernzugriff über das Internet auf den Inhalt nach einer Zeitspanne einer spezifizierten Länge freigegeben wird, Bestimmen der Nutzungssteuerungsinformationen gemäß der Zeitspanne einer spezifizierten Länge.

2. Verfahren nach Anspruch 1, ferner umfassend ein Bestimmen einer Nutzungsbindung des Inhalts abhängig davon, ob ein Fernzugriff über das Internet auf den Inhalt freigegeben ist;
wobei das Bestimmen der Nutzungsbindung ein Bestimmen der Nutzungsregel gemäß der bestimmten Nutzungsbindung umfasst.

3. Verfahren nach Anspruch 2, wobei das Bestimmen der Nutzungsbindung umfasst:
falls die Informationen angeben, dass der Fernzugriff über das Internet auf den Inhalt innerhalb einer verwalteten Domäne freigegeben ist, Bestimmen der Nutzungsbindung des Inhalts basierend auf der verwalteten Domäne.

4. Verfahren nach Anspruch 2, wobei das Bestimmen der Nutzungsbindung umfasst:
falls die Informationen angeben, dass der Inhalt betrachtet, kopiert und nur lokal bewegt wird, Bestimmen der Nutzungsbindung des Inhalts basierend auf der lokalen Region.

5. Verfahren nach Anspruch 2, wobei das Bestimmen der Nutzungsbindung das Bestimmen der Nutzungsbindung des Inhalts als eine Vorrichtungsgrenze, die eine Vorrichtung begrenzt, oder als eine Domänengrenze, die alle in einer einzigen Domäne enthaltenen Vorrichtungen begrenzt, umfasst;
wobei das Bestimmen der Nutzungsregel umfasst:
falls die Nutzungsbindung des Inhalts als die Vorrichtungsgrenze bestimmt wird, Bestimmen der Nutzungsregel des Inhalts in einer Vorrichtung, und falls die Nutzungsbindung des Inhalts als die Domänengrenze bestimmt wird, Bestimmen der Nutzungsregel des Inhalts in einer Domäne.

6. Verfahren nach Anspruch 2, ferner umfassend:
Verschlüsseln eines Inhaltsschlüssels mit einem Verschlüsselungsschlüssel entsprechend der vorbestimmten Nutzungsbindung; und
Verschlüsseln des Inhalts mit dem Inhaltsschlüssel;
wobei das Erstellen der zweiten Inhaltsdatei umfasst:
Erstellen der zweiten Inhaltsdatei, enthaltend die Nutzungsregel, den verschlüsselten Inhaltsschlüssel und den verschlüsselten Inhalt.

7. Verfahren nach einem vorangehenden Anspruch, wobei das Bestimmen der Nutzungsregel ein Bestimmen der Nutzungsregel des Inhalts abhängig davon umfasst, ob der Inhalt betrachtet, kopiert und nur lokal bewegt wird.

8. Verfahren nach Anspruch 7, wobei das Bestimmen der Nutzungsregel ferner umfasst:
falls die Informationen angeben, dass der Inhalt betrachtet, kopiert und nur lokal bewegt wird, Bestimmen der Nutzungsregel des Inhalts gemäß der lokalen Region.

9. Verfahren nach einem vorangehenden Anspruch, wobei die Informationen, die zum Steuern eines Fernzugriffs über das Internet auf den Inhalt verwendet werden, der in der ersten Inhaltsdatei enthalten ist, zum Steuern einer zweiten Vorrichtung verwendet werden, die an einer fernen Stelle von einer ersten Vorrichtung gelegen ist, die die zweite Inhaltsdatei empfängt, um fern auf den Inhalt über ein Netzwerk zuzugreifen.

10. Verfahren nach Anspruch 2, wobei:
das Bestimmen der Nutzungsbindung ferner umfasst:
Bestimmen der Nutzungsbindung des Inhalts als eine Vorrichtungsgrenze, die mehrere Vorrichtungen begrenzt, die durch einen Benutzer vorbestimmt werden; und
wobei das Bestimmen der Nutzungsregel umfasst:
Bestimmen der Nutzungsregel des Inhalts in den mehreren Vorrichtungen.

11. Computerlesbares Aufzeichnungsmedium, auf dem ein Programm zum Veranlassen eines Computers, ein Verfahren zum Importieren einer ersten Inhaltsdatei in eine zweite Inhaltsdatei auszuführen, gespeichert ist, wobei das Verfahren wie in einem vorangehenden Anspruch angeführt ist.

12. Vorrichtung zum Importieren einer ersten Inhaltsdatei in eine zweite Inhaltsdatei, die Vorrichtung umfassend:
eine Nutzungsregelbestimmungseinheit (102), die eine Nutzungsregel von Inhalt, der in der ersten Inhaltsdatei enthalten ist, basierend auf Informationen bestimmt, die zur Steuerung eines Fernzugriffs auf den Inhalt, der in der ersten Inhaltsdatei enthalten ist, verwendet werden; und
eine Inhaltsdateierstellungseinheit (110), die die zweite Inhaltsdatei erstellt, die den bestimmten Nutzungsregeln folgt;
**dadurch gekennzeichnet, dass:**
eine Nutzungssteuerungsinformationen-Bestimmungseinheit (104) angeordnet ist, die Informationen, die zur Steuerung eines Fernzugriffs auf den Inhalt, der in der ersten Inhaltsdatei enthalten ist, verwendet werden, zur Steuerung einer zweiten Vorrichtung zu verwenden, die an einer fernen Stelle von einer ersten Vorrichtung gelegen ist, die die zweite Inhaltsdatei empfängt, um fern auf den Inhalt über ein Netzwerk zuzugreifen,
wobei die Nutzungssteuerungsinformationen, die in der ersten Inhaltsdatei enthalten sind, angeben:
eine Art von Fernzugriff über das Internet auf den Inhalt unter verschiedenen Arten von Fernzugriff über das Internet auf den Inhalt; und
in Antwort auf die Nutzungssteuerungsinformationen, die in der ersten Inhaltsdatei enthalten sind, die angeben, dass ein Fernzugriff über das Internet auf den Inhalt nach einer Zeitspanne einer spezifizierten Länge freigegeben wird, die Nutzungssteuerungsinformationen-Bestimmungseinheit (103) konfiguriert ist, die Nutzungssteuerungsinformationen gemäß der Zeitspanne einer spezifizierten Länge zu bestimmen.

## Revendications

1. Procédé d'importation d'un premier fichier de contenu dans un second fichier de contenu, le procédé consistant :
à déterminer une règle d'utilisation d'un contenu inclus dans le premier fichier de contenu, sur la base d'informations utilisées pour contrôler un accès à distance du contenu inclus dans le premier fichier de contenu ; et
à générer le second fichier de contenu qui suit la règle d'utilisation déterminée ;
à déterminer des informations de contrôle d'utilisation du contenu inclus dans le premier fichier de contenu selon qu'un accès à distance du contenu est permis ;
dans lequel la génération du second fichier de contenu consiste à générer le second fichier de contenu comprenant les informations de contrôle d'utilisation déterminées et la règle d'utilisation déterminée ;
**caractérisé en ce que** les informations de contrôle d'utilisation sont déterminées en fonction des informations de contrôle d'utilisation incluses dans le premier fichier de contenu qui est utilisé pour contrôler un accès à distance sur Internet du contenu ; et
dans lequel les informations de contrôle d'utilisation incluses dans le premier fichier de contenu indiquent :
un type d'accès à distance sur Internet du contenu parmi divers types d'accès à distance sur Internet du contenu ; et
à la suite des informations de contrôle d'utilisation incluses dans le premier fichier de contenu indiquant qu'un accès à distance sur Internet du contenu est permis après une période de temps de longueur spécifiée, à déterminer les informations de contrôle d'utilisation en fonction de la période de temps de longueur spécifiée.

2. Procédé selon la revendication 1, consistant en outre à déterminer un lien d'utilisation du contenu selon qu'un accès à distance sur Internet du contenu est permis ;
dans lequel la détermination du lien d'utilisation consiste à déterminer le lien d'utilisation en fonction du lien d'utilisation déterminé.

3. Procédé selon la revendication 2, dans lequel la détermination du lien d'utilisation consiste :
si les informations indiquent qu'un accès à distance sur Internet du contenu est permis dans un domaine géré, à déterminer le lien d'utilisation du contenu en se basant sur le domaine géré.

4. Procédé selon la revendication 2, dans lequel la détermination du lien d'utilisation consiste :
si les informations indiquent que le contenu est vu, copié, et déplacé seulement localement, à déterminer le lien d'utilisation du contenu en se basant sur la région locale.

5. Procédé selon la revendication 2, dans lequel la détermination du lien d'utilisation consiste à déterminer que le lien d'utilisation du contenu doit être lié à un dispositif qui limite un dispositif, ou lié à un domaine qui limite tous les dispositifs inclus dans un domaine quelconque ;
dans lequel la détermination de la règle d'utilisation consiste :
s'il est déterminé que le lien d'utilisation du contenu est lié au dispositif, à déterminer la règle d'utilisation du contenu dans un dispositif quelconque et s'il est déterminé que le lien d'utilisation du contenu est lié au domaine, à déterminer la règle d'utilisation du contenu dans un domaine quelconque.

6. Procédé selon la revendication 2, consistant en outre :
à crypter une clé de contenu avec une clé de cryptage correspondant au lien d'utilisation déterminé ; et
à crypter le contenu avec la clé de contenu ;
dans lequel la génération du second fichier de contenu consiste :
à générer le second fichier de contenu comprenant la règle d'utilisation, la clé de contenu cryptée et le contenu crypté.

7. Procédé selon l'une quelconque des revendications précédentes, dans lequel la détermination de la règle d'utilisation consiste à déterminer la règle d'utilisation du contenu selon que le contenu est vu, copié et déplacé seulement localement.

8. Procédé selon la revendication 7, dans lequel la détermination de la règle d'utilisation consiste en outre :
si les informations indiquent que le contenu est vu, copié et déplacé seulement localement, à déterminer la règle d'utilisation du contenu en fonction de la région locale.

9. Procédé selon l'une quelconque des revendications précédentes, dans lequel les informations utilisées pour contrôler un accès à distance sur Internet du contenu inclus dans le premier fichier de contenus sont utilisées pour commander un second dispositif situé à un endroit distant par rapport à un premier dispositif qui reçoit le second fichier de contenu pour un accès à distance du contenu sur un réseau.

10. Procédé selon la revendication 2, dans lequel :
la détermination du lien d'utilisation consiste en outre :
à déterminer que le lien d'utilisation du contenu doit être lié à un dispositif qui limite une pluralité de dispositifs prédéterminés par un utilisateur ; et
dans lequel la détermination de la règle d'utilisation consiste :
à déterminer la règle d'utilisation du contenu dans la pluralité de dispositifs.

11. Support d'enregistrement lisible par ordinateur sur lequel est stocké un programme pour contraindre un ordinateur à exécuter un procédé d'importation d'un premier fichier de contenu dans un second fichier de contenu ; dans lequel le procédé est exposé dans l'une quelconque des revendications précédentes.

12. Appareil pour importer un premier fichier de contenu dans un second fichier de contenu, l'appareil comprenant :
une unité de détermination de règle d'utilisation (102) qui détermine une règle d'utilisation d'un contenu inclus dans le premier fichier de contenu, sur la base d'informations utilisées pour contrôler un accès à distance du contenu inclus dans le premier fichier de contenu ; et
une unité de génération de fichier de contenu (110) qui génère le second fichier de contenu qui suit la règle d'utilisation déterminée ;
**caractérisé en ce que** :
une unité de détermination d'informations de contrôle d'utilisation (104) est conçue pour utiliser les informations utilisées pour contrôler un accès à distance du contenu inclus dans le premier fichier de contenu pour commander un second dispositif situé à un endroit distant par rapport à un premier dispositif qui reçoit le second fichier de contenu pour avoir accès à distance au contenu sur Internet,
dans lequel les informations de contrôle d'utilisation incluses dans le premier fichier de contenu indiquent :
un type d'accès à distance sur Internet du contenu parmi divers types d'accès à distance sur Internet du contenu ; et
à la suite des informations de contrôle d'utilisation incluses dans le premier fichier de contenu indiquant qu'un accès à distance sur Internet du contenu est permis après une période de temps de longueur spécifiée, l'unité de détermination d'informations de contrôle d'utilisation (103) est configurée pour déterminer les informations de contrôle d'utilisation en fonction de la période de temps de longueur spécifiée.
